# EUROPEAN PATENT APPLICATION

(11) **EP 3 466 808 A1**
(43) Date of publication of application: **10.04.2019**
(21) Application number: 17382657.9
(22) Date of filing: 03.10.2017
(51) Int. Cl.: B64C 3/18, B64F 5/10, B64F 5/50

(54) **FITTING FOR THE TRANSPORT OF AN INDUSTRIAL PART**

(71) Applicant: Airbus Operations S.L., 28906 Getafe (ES)
(72) Inventor: DE JULIAN AGUADO, Antonio, E-28906 Getafe, Madrid (ES); LOZANO GARCÍA, José Luis, E-28906 Getafe, Madrid (ES)
(74) Representative: ABG Intellectual Property Law, S.L.

(57) **Abstract**

The invention provides a fitting for transporting an industrial part, the fitting comprising: a first fitting member comprising a first surface, and a second fitting member comprising a second surface, wherein the first surface of the first fitting member comprises a protuberance and the second surface of the second fitting member comprises a recess, wherein the protuberance and the recess are configured such that the protuberance is insertable in the recess and such that when the protuberance is inserted along the recess the first fitting member and the second fitting member are slidable one on another along at least a first direction .

## Description

### TECHNICAL FIELD OF THE INVENTION

The present invention belongs to the field of transport of tight and voluminous industrial parts, in particular industrial parts including an internal hermetical seal. The invention relates to a fitting adapted for being used in the transport of such industrial parts, avoiding damaging the internal seal of such hermetically sealed industrial parts. The invention is of special application in the aeronautic industry.

### BACKGROUND OF THE INVENTION

Within the aeronautical industry, there is a high demand of coordination and timing in the transport of all the aircraft parts for their final assembly. During this process, the aircraft parts are rotating over workstations. By mechanically moving the aircraft parts and/or a semi-finished assembly from workstation to workstation, a finished product can be assembled faster and with less labour than by solely having workers carrying the aircraft parts over workstations for assembly.

Addressing aeronautics, these industrial parts to be transported have high structural requirements in terms of dimensions and materials and, thus, they are usually really expensive. In particular, one of the aeronautical parts which require special care is fuel tanks, which may be classified by their construction method and intended use. For instance, there may be integral tanks inside the aircraft structure that have been previously sealed to allow fuel storage such as *"wet wing",* or rigid amovible tanks installed in a compartment designated to accommodate the tank.

In cases where those voluminous industrial parts contain an internal seal for avoiding leakage of fuel, such as wings, fuselage sections or horizontal tail planes (HTP), a special care should be taken when moving or transporting them because the fittings conventionally used for the transport of said industrial parts can damage the internal seal when said fittings are mounted or demounted.

In order to prevent such damage when demounting the fittings, a regular procedure is to maintain the fittings mounted on the tight voluminous parts even when the aircraft is totally assembled, assuming a non-negligible addition of weight because the fittings are made essentially of steel.

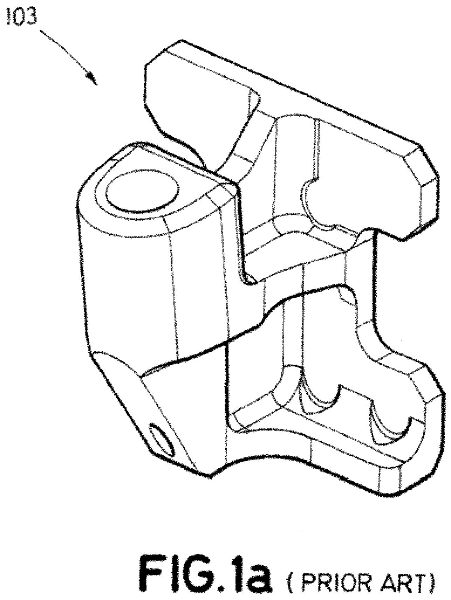

Due to the foregoing drawbacks there is a solution nowadays in use for transporting said industrial parts with an internal seal. This current solution consists on using a conventional fitting and a stud pin (see Figs. 1a-1b, Prior Art) with two threaded collars, one collar which remains inside the part, placed between the wall and the seal, and a second collar outside the fittings for avoiding their demounting. However, this mentioned solution does not work as expected because during the demounting of the fitting by screwing off the collars from the stud pin, an unexpected rotation of the internal collar can be produced and therefore it is possible that the seal would be damaged, thus provoking a leakage non-detected during inspection that can raise afterwards on flight.

Thus, current transporting solutions of tight voluminous parts are labor-intensive, multi-step process that requires high precision in order not to damage the internal seal, being therefore a time-consuming labor which may even add a non-negligible weight to the aircraft.

### SUMMARY OF THE INVENTION

The present invention provides a solution for the aforementioned problems, by a fitting according to claim 1, an industrial part comprising said fitting according to claim 9, and an aircraft according to claim 15. In dependent claims, preferred embodiments of the invention are defined.

In a first inventive aspect, the invention provides a fitting for transporting an industrial part, comprising:
a first fitting member comprising a first surface,
a second fitting member comprising a second surface,
wherein the first surface of the first fitting member comprises a protuberance and the second surface of the second fitting member comprises a recess, wherein the protuberance and the recess are configured such that the protuberance is insertable in the recess and such that when the protuberance is inserted along the recess the first fitting member and the second fitting member are slidable one on another along at least a first direction.

Throughout this entire document, "fitting" will be understood as a structural element, preferably made of steel, which is configured to be attached to an industrial part, normally a heavy and voluminous industrial part, for the displacement of the industrial part by pushing and/or pulling the said fitting using an external element such as a guiding rod, a hoisting rope or any other type of elements able to move the fitting, wherein the fitting is attachable both with the industrial part and with the external element. Therefore, the industrial part can be moved up, down and/or laterally by a transfer of loads through the fitting.

Advantageously, the fitting is divided into a first fitting member and a second fitting member wherein the first fitting member is configured to be permanently attached to the industrial part, and wherein the second fitting member is removable from the first fitting member and reusable. Hence, the overall functions of a conventional fitting are split to better undergo the load transfer without penalties in weight when the fitting remains mounted on the industrial part. Preferably, such industrial part is an aeronautical industrial part having an internal seal.

Furthermore, the present invention provides a solution for the aforementioned problems, with the following advantages:
- Weight saving, since not the entire fitting is remained in the aeronautical part in flight, but only a portion (the first fitting member). By keeping only the first fitting member attached to the aeronautical part fuel consumption is reduced.
- After carrying out the conventional inspectional tests to the industrial part mounting permanently the first fitting member, it can be assured that there will not be non-expected leakage during operation over time.
- Cost saving, because just a portion (the first fitting member) of the original fitting is replaced, whereas the portion left (the second fitting member) can be used for a number of moving operations.
- Time saving, because just a portion of the original fitting is replaced and thus the external attaching element may be permanently attached to the second fitting member, avoiding repeated engagement and disengagement of both elements.
- Retrofitability, because it can be used with no modifications (neither minor nor major) on the current industrial part due to the attachments spots of the current industrial parts being usable for attaching the fitting of the invention.

In a preferred embodiment, the protuberance and the recess have each a cross-sectional profile such that, once the protuberance is inserted in the recess, a relative movement between the first fitting member and the second fitting member is allowed only along the first direction.

In an embodiment, the protuberance and the recess have substantially the same cross-sectional profile. In order to ensure the protuberance is insertable into the recess, the cross-sectional profile of the protuberance must be slightly smaller than the recess but with a tight contact for maintaining the first and second fitting members joined without external attachments.

In a preferred embodiment, the protuberance of the first surface and/or the recess of the second fitting member comprise a constant cross-sectional profile, said profile preferably being a dovetail.

Even though any shape of the cross-sectional profile may be used as long as it allows insertion of the protuberance along the recess, the embodiment of a dovetail cross-sectional profile is preferred, since it provides a greater contact area between the first and second fitting members without penalties in weight, strength and endurance.

Advantageously, by maximizing the contact area a better loads transfer is achieved by distributing the local loads transferred from the second fitting member to the first fitting member. Therefore, the local loads are redistributed around a greater area, thus reducing the maximum load peaks.

In an embodiment, the protuberance extends lineally on the first surface along the first direction, said first direction being perpendicular to a second direction, the second direction corresponding to the direction of maximum load transfer between first and second fitting member. In this embodiment if the principal function of the fitting is hoisting an industrial part, according to a movement along a vertical axis, the protuberance and recess would be extended in the horizontal axis as to redistribute the loads around all the contact area to reduce the maximum load peaks. Preferably, the protuberance extends all or the entire first surface along the first direction.

In a preferred embodiment, the fitting further comprises at least one first attachment configured to avoid over sliding of the first fitting member and the second fitting member when the protuberance of the first fitting member is inserted into the recess of the second fitting member and configured to provide an additional clamping force between said first and second fitting members.

In a more preferred embodiment, the first fitting member comprises at least one hole, preferably in the protuberance, and the second fitting member comprises at least one housing going through the second surface to outside the fitting in order to be accessible from outside. According to this embodiment, said at least one first attachment can be arranged once the first and second fitting members are totally attached one to the other to avoid over sliding of the first fitting member and the second fitting member and to provide an additional clamping force between said first and second fitting members.

In an embodiment, the first attachment comprises at least one fastener. Said at least one first attachment may be a conventional fastener such as a bolt, a pin, a rivet and/or any other hardware device that mechanically joins or affixes two or more objects together by creating joints that can be removed or dismantled without damaging the joining components.

In an embodiment, the second fitting member further comprises a second attachment configured or adapted for pulling and/or pushing the industrial part when the fitting is attached thereto.

In a preferred embodiment, the second attachment comprises a threaded housing to insert a guiding driver. Nevertheless, any other type of second attachment may be used depending on the external element used for pulling and/or pushing the industrial part, i.e. if a hoisting rope or chain were used, it would be suitable to use a lifting eye joined to the second fitting member. Preferably, the fitting has a symmetry plane and the second attachment is arranged in the symmetry plane of the fitting.

In a preferred embodiment, the first fitting member has a thickness (e) smaller than the thickness of the second fitting member (e'). Advantageously, in this embodiment the weight and space occupied by the first fitting member is less than the respective weight and size of the second fitting member, achieving that the weight added permanently to the industrial part is as less as possible while assuring a proper working of the pair of fitting members.

In a second aspect of the present invention, it is provided an industrial part comprising an internal seal, the industrial part further comprising:
a fitting according to the first inventive aspect of the invention, and
a supporting element,
wherein the supporting element is positioned between the internal seal of the industrial part and the first fitting member of the fitting, and
wherein the first fitting member of the fitting is fixed to the supporting element permanently.

Throughout this entire document, an industrial part comprising an internal seal will be understood as a tight or hermetical industrial part.

Besides, the supporting element of the industrial part may be either an integral element of the industrial part or an additional element.

In an embodiment of the second aspect, the supporting element and the first fitting member are fixed by a third attachment. Preferably, said third attachment comprises one or several fasteners or any other hardware device that mechanically joins or affixes two or more objects together by creating joints that can be removed or dismantled without damaging the joint objects.

Advantageously, these elements are preferred because they are easy to install or mount, they are inexpensive and they are not intended to modify structural constraints of the industrial part. Nonetheless, this joining between the supporting element and the first fitting member is intended to be permanent and therefore any other joining method such as adhesive, mechanical or chemical bonding may be used between the supporting element and the first fitting member.

Throughout this entire document, "permanent" should be understood as intended to be mounted or being functioning for a long period apart from the periodic inspections in which the fitting should be dismounted. However, if no dismounting is needed and non-expected events never occur, the joining between the supporting element and the first fitting member is envisaged to endure indefinitely.

In an embodiment of the second inventive aspect, the industrial part comprises a removable collar having a closed end placed inside the internal seal, and wherein said closed end of the collar is configured to cover and seal the end of said third attachment, preferably cover and seal the end of said one or several fasteners which extend beyond the internal seal to inside the industrial part.

It should be understood that, this one or several fasteners of the third attachment substantially go through the first surface of the first fitting member to inside the industrial part by a corresponding housing, such as a through hole.

The fasteners of the third attachment are preferably fixed and operable by their end closest to the first surface and are retained in their other end by the collar. Hence, the collar comprises one closed end, and another end for receiving and mating the fastener while supporting onto the internal seal, thus the collar is working as a cap nut or retainer.

Advantageously, this embodiment solves the disadvantage that every rivet, bolt, nut plate, hose and tube (fasteners in general) that penetrates the internal seal must be sealed to prevent leakage or seeping around these hardware components.

Throughout this entire document, "internal seal" should be construed as any internal protection made of any material or sealant (such as composites, rubbers or plastics) that conditions a liquid inside (preferably fuel) to the operational conditions and prevents leakages. This material or sealant allows for expansion and contraction due to rapid temperature changes (such as when cold fuel is pumped into a warm tank) and must retain its sealing properties when submerged in fuel and when left dry for long periods of time. It is to be noted that, one of the main disadvantages when working with sealant is that it can be difficult and hard to replace old sealant inside a tank if the old sealant needs to be removed before new sealant can be applied. Advantageously, by the use of an industrial part according to the invention, this disadvantage is overcome.

In a preferred embodiment, said collar also comprises a sealant disposed all over it such that the sealant prevents leakage from the internal seal to outside the industrial part.

Advantageously, this improves sealing function.

In an embodiment of the second inventive aspect, the supporting element is an integral wall that belongs to the industrial part. By this way, the first fitting member is attached to an integral structure of the industrial part and is able to withstand better the loads introduced.

In a preferred embodiment of the second inventive aspect, the supporting element is a spar and the industrial part is an aeronautical voluminous part such as an HTP or wing.

The spar is often the main structural member of the wing, running spanwise the lifting surface at right angles (or thereabouts depending on wing sweep) to the fuselage. As the spar carries flight loads and the weight of the wings while on ground, spars are suitable for attaching the fittings and transfer the loads of pulling or pushing.

The third inventive aspect of the invention provides an aircraft comprising the industrial part according to the second inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1a-1b: These figures show a fitting according to the Prior Art, namely using a stud pin with two threaded collars.
- Figures 2a-2c: These figures show the first fitting member, the assembly of first fitting member and second fitting member, and the final assembled first and second fitting members, respectively, according to an embodiment of the invention.
- Figure 3: This figure shows a cross-sectional view of the assembly of the first fitting member with the supporting element according to an embodiment of the invention.
- Figure 4: This figure shows a cross-sectional view of the industrial part according to an embodiment of the present invention.
- Figure 5: This figure shows an aircraft comprising an industrial part according to the invention.

### DETAILED DESCRIPTION OF THE INVENTION

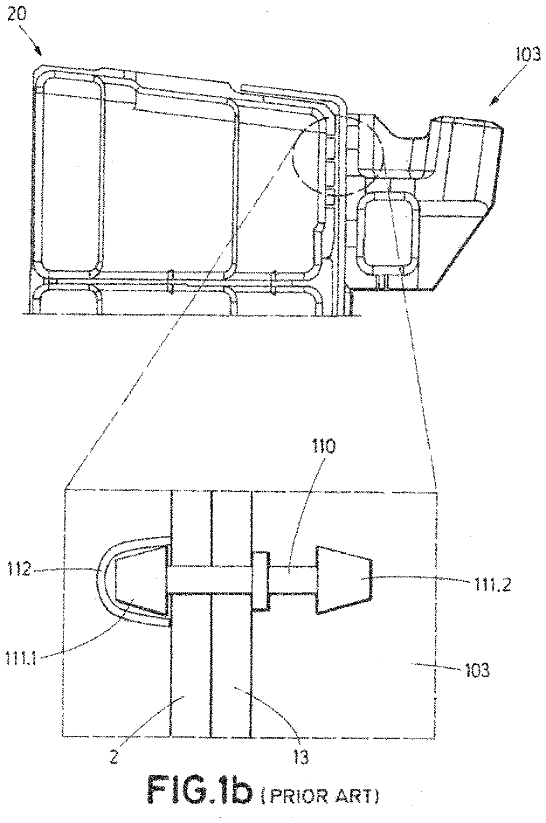

Figures 1a and 1b (Prior art) show a solution nowadays in use for transporting industrial parts (20) with an internal seal (2) which consists on using a stud pin (110) with two threaded collars (111.1, 111.2), one collar (111.1) remaining permanently inside the part (20) placed between a wall or any supporting element (13) and the internal seal (2), and a second collar (111.2) outside the fittings (103) for avoiding the demounting and easing the operation from outside.

As mentioned in the background, this solution does not work as expected because during the demounting by screwing off the collars (111.2) from the stud pin (110), an unexpected rotation of the internal collar (111.1) may be produced and therefore it is possible that the internal seal (2) or a sealant (112) would be damaged.

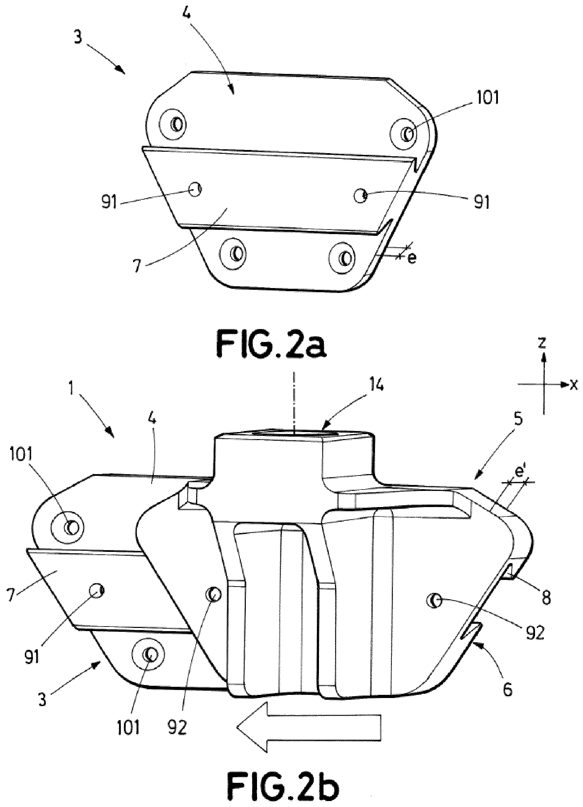

Figures 2a to 2c show different steps when assembling a first fitting member (3) and a second fitting member (5) according to an embodiment of the invention. Figure 2a shows the first fitting member (3) comprising a first surface (4) and a protuberance (7) protruding from the first surface (4). Preferably, the first fitting member (3) is substantially a plate, and more preferably the first surface (4) is substantially flat. Also, cross-sectionally, the first fitting member (3) comprises a plate having a thickness (e), without regard the protuberance (7).

The protuberance (7) may be local or may extend from one edge of the first surface (4) to the contrary edge, either continuously or discontinuously. In the embodiment of figure 2a, the protuberance extends continuously from one edge to opposite edge of the first surface. Moreover, the protuberance (7) comprises a cross-sectional shape being preferably constant and more preferably being constant and with a dovetail shape.

In Fig. 2a, a continuous lineal protuberance (7) extending along a first direction (X) and presenting a dovetail cross-sectional shape is shown according to a preferred embodiment of the invention. The first direction (X) of the protuberance (7) along the first surface (4) is perpendicular to a second direction, the second direction corresponding to a direction of maximum load transfer between first (3) and second (5) fitting member.

In a preferred embodiment the fitting is attached to the industrial part such that the first direction (X) of the protuberance is the horizontal direction and the direction of maximum load transfer corresponds to a vertical direction (Z), because the main purpose of the fitting (1) is hoisting the industrial part by moving it along a vertical axis (Z).

Furthermore, to be attached to other structures, particularly to the industrial part, in this embodiment the first fitting member (3) also comprises at least one hole (91) for receiving a first attachment (9). The at least one hole (91) is preferably arranged in the protuberance (7). The at least one hole (91) is preferably a threaded hole. Additionally, in this embodiment the first fitting member (3) comprises at least one housing (101) for receiving a third attachment (10). Said at least one housing (101) comprises a through hole arranged totally crossing the thickness (e) of the first fitting member (3), and the first surface (4) further comprises a countersink recess matching the head of the third attachment (10).

Advantageously, the countersink recess on the first surface (4) facilitates the insertion of the protuberance (7) of the first fitting member (3) into the recess (8) of the second fitting member (5), maintaining the first surface (4) of the first fitting member (3) and the second surface (6) of the second fitting member (5) in a tight contact.

Fig. 2b shows an intermediate step between the step in which both first (3) and second (5) fitting members are totally separated and the step in which the protuberance (7) of the first fitting member (3) is totally inserted into the recess (8) of the second fitting member (5). In Fig. 2b the recess (8) arranged on the second surface (6) of the second fitting member (5) is shown. Preferably, the second fitting member (5) is substantially a plate with local reinforcements to better withstand loads, and the second surface (6) is preferably substantially flat. Also, cross-sectionally, the second fitting member (5) comprises a plate having a thickness (e') and local reinforcements. In addition, the thickness (e') of the plate is without regard the recess (8).

Preferably, the plate of the first fitting member (3) has a thickness (e) smaller than the thickness (e') of plate of the second fitting member (5).

The recess (8) may be local or may extend from one edge of the second surface (5) to the contrary edge, either continuously or discontinuously according to the protuberance (7). Moreover, the recess comprises a cross-sectional shape being preferably constant and more preferably being constant and with a dovetail shape. More preferably, the protuberance (7) and the recess (8) have substantially the same cross-sectional shape. In Figure 2b, a continuous lineal recess presenting a dovetail shape is shown according to a preferred embodiment of the invention. The direction of both the recess (8) and protuberance (7), along the second surface (6) and the first surface (4), respectively, corresponds to a direction being perpendicular to a direction of maximum load transfer between first (3) and second (5) fitting member.

Preferably, the first (3) and second (5) fitting members are configured such that when the protuberance (7) is inserted in the recess (8) the first surface (4) and the second surface (6) are in direct contact, being understood in a tight manner, around all the area for better redistribution of the transferred loads.

The second fitting member (5) further comprises at least one housing (92), preferably arranged in the recess (8), for receiving a first attachment (9). The at least one housing (92) is preferably a threaded hole, and more preferably said at least one housing (92) is a through hole arranged totally crossing the thickness (e') of the second fitting member (5).

Also, the second fitting member (5) also comprises a second attachment (14) arranged in the symmetry plane of the second fitting member (5). In addition, the second attachment (14) is configured to allow pulling and/or pushing the assembled set of first and second fitting members (3, 5) and the industrial part (20).

As can be seen in Fig. 2b, the first and second fitting members (3, 5) are configured to be attached by sliding one fitting member relative to the other fitting member, using the pair protuberance (7) - recess (8) as an attachment in a tightly manner. The arrow depicted in Fig. 2b shows the sliding direction, which corresponds to the first direction (X).

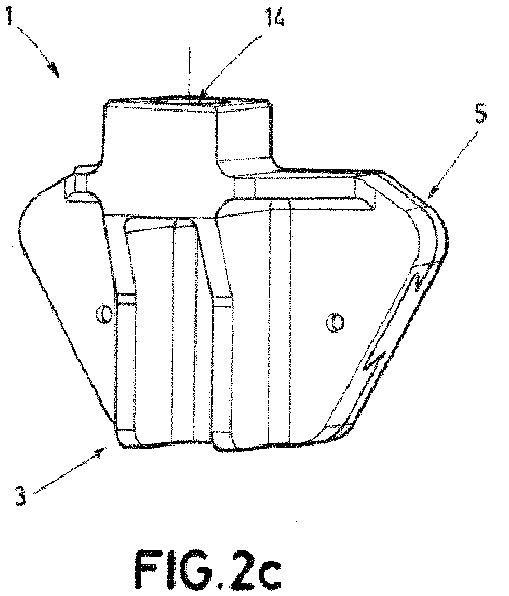

Finally, Fig. 2c shows the final step when the first and second fitting members (3, 5) are attached one to the other in a configuration such that the hole (91) of the first fitting member (3) and the housing (92) of the second fitting member (5) match in position in the protuberance (7) and the recess (8), respectively, to then both receive the first attachment (9).

As can be seen in Fig. 2c, in the preferred embodiment of the invention, both the perimeter and total area of the first and second surfaces (4, 6) are identical.

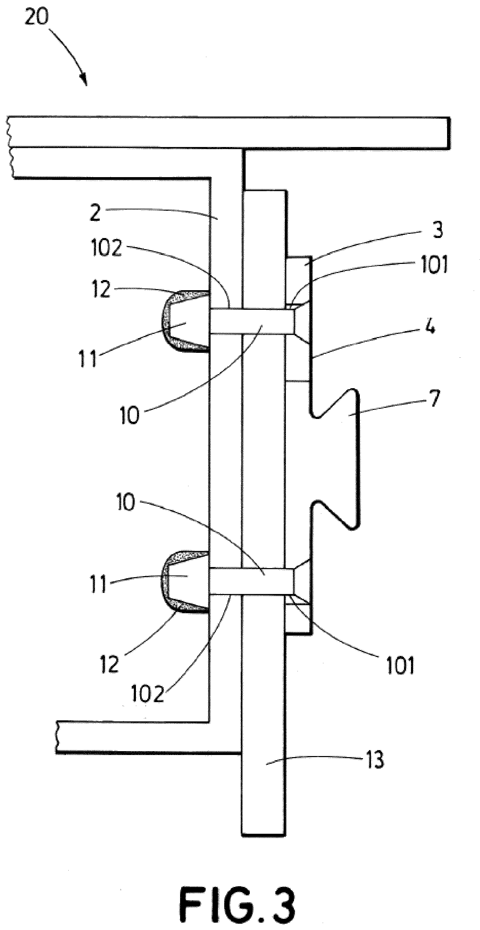

In Fig. 3 a particular cross-sectional view of the assembly between the first fitting member (3) and a supporting element (13) of an industrial part (20) is shown. The industrial part (20) comprises an internal seal (2), a first fitting member (3) and a supporting element (13) positioned between the internal seal (2) and the first fitting member (3).

The supporting element (13) is preferably a structural element of the industrial part (20) intended to be transported. In this figure, the industrial part (20) further comprises a third attachment (10) for joining permanently the first fitting member (3). To house this third attachment (10), the supporting element (13) includes one or several housings (102) arranged as through holes totally crossing the supporting element (13) and corresponding to housings (101) arranged in the first fitting member (3), which are also in the form of through holes. These housings (101, 102) allow inserting the third attachment (10) from the side of the first fitting member (3), and the head of the third attachment (10) is housed in a countersink recess in the first surface (4).

Fig. 3 also shows the industrial part (20) comprising at least one removable collar (11) having a closed end placed inside the internal seal (2). The closed end is configured to cover and seal the end of the third attachment (10) extended beyond the internal seal (2) to inside the industrial part (20). This third attachment (10) goes through the first surface (4) of the first fitting member (3) to inside the industrial part (20) through the housings (101, 102) previously described.

Preferably the third attachment comprises at least one fastener. The at least one fastener is preferably fixed and operable by the end of the fastener located at the first surface (4) and is retained in the other end by the collar (11). Hence, the collar comprises one closed end and other end receiving and mating the fastener while supporting it onto the internal seal (2), thus working as a cap nut or retainer.

Additionally, to improve sealing function, said collar (11) also comprises a sealant (12) disposed all over it such that the sealant (12) prevents leakage from the internal seal (2) to outside the industrial part (20).

As can be noted, the internal seal (2) may be an integral part of the supporting element (13) or an additional sealing member. Furthermore, the supporting element (13) may be a combination of structural elements of the industrial part (20), for instance the supporting element (13) may be a spar, a rib, a skin panel, a stiffener, or a combination thereof.

Preferably, the surfaces in contact of the supporting element (13) and the first fitting member (3) are in direct contact for assuring a better transfer load between them.

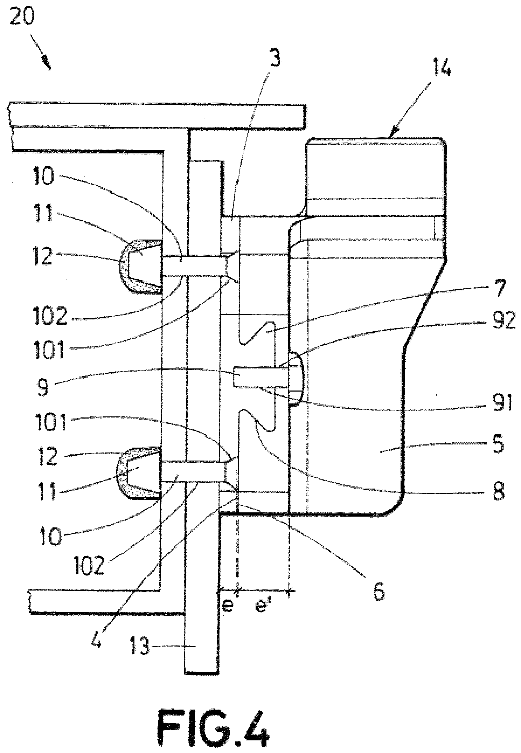

Fig. 4 shows the same configuration of Fig. 3 further comprising the second fitting member (5) as described previously, according to an embodiment of the invention.

The preferred feature of the first fitting member (3) having a thickness (e) smaller than the thickness of the second fitting member (e') is shown in this figure.

Also, this figure shows a first attachment (9) joining the first (3) and second (5) fitting members. The first attachment (9) is inserted into a housing formed by the hole (91), preferably arranged in the protuberance (7) of the first fitting member (3), and by the housing (92) formed as a through hole, arranged totally crossing the thickness (e') of the second fitting member (5).

It may be noted that only for illustrative reasons, the cross-sectional view shows one fastener corresponding to the first attachment (9) and two fasteners corresponding to the third attachment (10) arranged in the same plane, but any other configuration can be used. Preferably, the positions of the third attachment (10) correspond to the original lay-out holes of the supporting element (13) for attaching a conventional fitting.

Although the at least one housing (92) is arranged totally crossing the thickness (e') of the second fitting member (5), this cross-sectional view seems to show that the first attachment (9) is placed inside the second fitting member (5) with no access from outside. However, the thickness (e) of the plate of the first fitting member (3) and the thickness (e') of the plate of the second fitting member (5) are as shown in figures 2a and 2b.

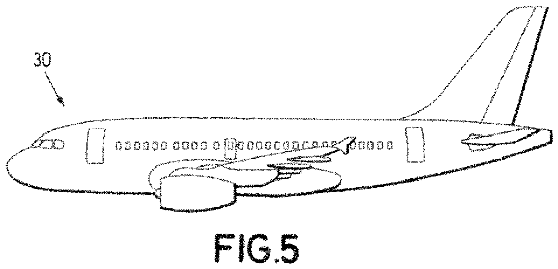

Fig. 5 shows an aircraft (30) comprising an industrial part (20) as described in the foregoing paragraphs.

## Claims

1. A fitting (1) for transporting an industrial part (20), the fitting (1) comprising:
a first fitting member (3) comprising a first surface (4),
a second fitting member (5) comprising a second surface (6),
wherein the first surface (4) of the first fitting member (3) comprises a protuberance (7) and the second surface (6) of the second fitting member (5) comprises a recess (8), wherein the protuberance (7) and the recess (8) are configured such that the protuberance (7) is insertable in the recess (8) and such that when the protuberance (7) is inserted along the recess (8) the first fitting member (3) and the second fitting member (5) are slidable one on another along at least a first direction (X).

2. The fitting (1) according to claim 1 wherein the protuberance (7) and the recess (8) have substantially the same cross-sectional profile.

3. The fitting (1) according to any of the preceding claims, wherein the protuberance (7) and/or the recess (8) comprise a constant cross-sectional profile, said profile preferably being a dovetail.

4. The fitting (1) according to any of the preceding claims, wherein the protuberance (7) extends all the first surface (4) along the first direction (X), said first direction being perpendicular to a second direction, the second direction corresponding to the direction of maximum load transfer (Z) between the first (3) and second (5) fitting members.

5. The fitting (1) according to any of the preceding claims further comprising at least one first attachment (9) configured to avoid over sliding of the first fitting member (3) and the second fitting member (5) when the protuberance (7) of the first fitting member (3) is inserted into the recess (8) of the second fitting member (5) and configured to provide an additional clamping force between said first (3) and second (5) fitting members.

6. The fitting (1) according to claim 5 wherein the first attachment (9) comprises at least one fastener.

7. The fitting (1) according to any of the preceding claims wherein the second fitting member (5) comprises a second attachment (14) configured to pull and/or push the industrial part (20) when the fitting is attached to the industrial part (20), the second attachment (14) being preferably a threaded housing for insertion of a guiding driver.

8. The fitting (1) according to any of the preceding claims wherein the first fitting member (3) has a thickness (e) smaller than the thickness (e') of the second fitting member (5).

9. An industrial part (20) comprising an internal seal (2), the industrial part (20) further comprising:
a fitting (1) according to any of the previous claims, and
a supporting element (13),
wherein the supporting element (13) is positioned between the internal seal (2) of the industrial part (20) and the first fitting member (3) of the fitting (1), and wherein the first fitting member (3) of the fitting is fixed to the supporting element (13).

10. The industrial part (20) according to claim 9 wherein the supporting element (13) and the first fitting member (3) are fixed by a third attachment (10), preferably comprising one or several fasteners (10).

11. The industrial part (20) according to claim 10 further comprising a removable collar (11) having a closed end placed inside the internal seal (2), and wherein the collar is configured to cover and seal the end of said third attachment (10), preferably cover and seal the end of said one or several fasteners which extends beyond the internal seal (2) to inside the industrial part (20).

12. The industrial part (20) according to claim 11 wherein said collar (11) also comprises a sealant (12) disposed all over it such that the sealant (12) prevents leakage from the internal seal (2) to outside the industrial part (20).

13. The industrial part (20) according to any of claims 9-12 wherein the supporting element (13) is an integral wall that belongs to the industrial part (20).

14. The industrial part (20) according to any of claims 9-13 wherein the supporting element (13) is a spar and wherein the industrial part (20) is an aeronautical voluminous part such as an HTP or wing.

15. An aircraft (30) comprising an industrial part (20) according to any of claims 9-14.
